# EUROPÄISCHE PATENTSCHRIFT

(11) **EP 2 392 981 B1**
(45) Veröffentlichungstag und Bekanntmachung des Hinweises auf die Patenterteilung: **15.11.2017**
(21) Anmeldenummer: 11163313.7
(22) Anmeldetag: 21.04.2011
(51) Int. Cl.: G05B 19/418

(54) **Verfahren zur Steuerung einer getakteten Fertigungsstraße**
Method for controlling a metered production run
Procédé de commande d'une voie de fabrication cadencée

(30) Priorität: 03.06.2010 DE 102010022582
(43) Veröffentlichungstag der Anmeldung: 07.12.2011
(73) Patentinhaber: Broetje-Automation GmbH, 26180 Rastede (DE)
(72) Erfinder: Eickhorst, Dirk, 26316, Varel-Altjuhrden (DE)
(74) Vertreter: Gottschald, Jan

(56) Entgegenhaltungen:
- EP-B1- 0 593 127
- DE-B4-102005 034 079

## Beschreibung

Die Erfindung betrifft ein Verfahren zur Steuerung einer getakteten Fertigungsstraße gemäß Anspruch 1 sowie eine Ablaufsteuerung für den Betrieb einer getakteten Fertigungsstraße gemäß Anspruch 12.
Im Rahmen der Flugzeugfertigung stellt die Bearbeitung großer Flugzeug-Strukturbauteile hohe Anforderungen an die jeweilige Fertigungseinrichtung. Ein Grund hierfür besteht darin, dass die Längsausdehnung der Strukturbauteile nicht selten größer ist als die Längsausdehnung des Arbeitsraums einer dem Strukturbauteil zugeordneten Bearbeitungsstation.
Beispiele für solche Flugzeug-Strukturbauteile sind Rumpfsektionen oder Tragflächensektionen eines Flugzeugs. Typische, im Rahmen der Fertigung hier abzuarbeitende Operationen sind Nietoperationen, die beispielsweise die Verbindung von Spanten und Stringern einer Rumpfsektion oder die Verbindung von Spanten und Außenhautsegmenten einer Rumpfsektion oder einer Tragfläche betreffen. Die Bearbeitung von Rumpfsektionen steht vorliegend im Vordergrund, was nicht beschränkend zu verstehen ist.
In der Vergangenheit sind verschiedene Versuche unternommen worden, die Flugzeugfertigung zumindest in Teilen zu automatisieren. Beispielsweise ist es bekannt, für die maschinelle Durchführung von Nietoperationen NC-gesteuerte Nietroboter einzusetzen (EP 0 593 127 B1). DE 10 2005 034079 B4 offenbart eine getakteten Fertigungsstraße geeignet zur Bearbeitung von Strukturbauteilen, womit der Werkstückdurchsatz optimiert wird, z.B. durch den geringsten Transportweg.

Es ist ferner bekannt geworden, eine getaktete Fertigungsstraße für die Bearbeitung von Flugzeug-Strukturbauteilen wie Rumpfsektionen einzusetzen, wobei die Fertigungsstraße beispielsweise eine Niet-Bearbeitungsstation mit Nietrobotern aufweist.
Bei einer bekannten Fertigungsstraße werden die Rumpfsektionen nacheinander taktweise durch den Arbeitsbereich der Niet-Bearbeitungsstation hindurch gefördert. An die Niet-Bearbeitungsstation schließen sich nahtlos weitere Bearbeitungsstationen an, die von den Rumpfsektionen ebenfalls taktweise durchlaufen werden.

Die obige, getaktete Fertigungsstraße stellt ganz besonders hohe Anforderungen an die Programmierung der NC-gesteuerten Nietroboter. Der Grund hierfür besteht zunächst einmal darin, dass die Rumpfsektionen die Bearbeitungsstationen in verschiedensten Reihenfolgen durchlaufen, so dass in der Regel je nach Fertigungstakt ein unterschiedlicher Satz von Nietoperationen umzusetzen ist.

Erschwerend kommt hinzu, dass der Arbeitsbereich der Niet-Bearbeitungsstation aufgrund der unterschiedlichen Längsausdehnung der Rumpfsektionen regelmäßig nur mit Abschnitten von Rumpfsektionen, und nicht mit ganzen Rumpfsektionen belegt ist. Beispielsweise kann die Niet-Bearbeitungsstation mit zwei Abschnitten unterschiedlicher Rumpfsektionen belegt sein.

Ungeachtet des hohen Programmieraufwands haben sich Fertigungsstraßen für die Flugzeugfertigung bewährt. Allerdings hat sich auch gezeigt, dass der praktische Werkstückdurchsatz im Hinblick auf den theoretisch möglichen Werkstückdurchsatz gesteigert werden kann.

Der Erfindung liegt das Problem zugrunde, das bekannte Verfahren zur Steuerung einer getakteten Fertigungsstraße für die Bearbeitung von Flugzeug-Strukturbauteilen derart weiterzubilden, dass der Werkstückdurchsatz optimiert wird.

Das obige Problem wird durch ein Verfahren gemäß Anspruch 1 gelöst.

Wesentlich ist die Überlegung, die Abarbeitungsreihenfolge in einer Bearbeitungsstation für jeden Fertigungstakt in Abhängigkeit von der zu erwartenden oder tatsächlichen Belegung des Arbeitsbereichs der Bearbeitungsstation neu zu bestimmen. Damit kann auf die unterschiedlichen Belegungen mit einer optimalen Abarbeitungsreihenfolge reagiert werden.

Von besonderer Bedeutung bei der vorschlagsgemäßen Lösung ist die Tatsache, dass die Strukturbauteile hinsichtlich der daran abzuarbeitenden Operationen nicht jeweils als Ganzes, sondern abschnittsweise betrachtet werden. Zu jedem beliebigen Abschnitt des Strukturbauteils lassen sich so die zugeordneten, abzuarbeitenden Operationen ermitteln. Dabei kann jede Operation auch eine Anzahl von Unteroperationen umfassen.

Zur Ermittlung der Abarbeitungsreihenfolge in der Bearbeitungsstation für einen Fertigungstakt wird vorschlagsgemäß zunächst die voraussichtliche oder tatsächliche Belegung des Arbeitsbereichs mit Strukturbauteil(en) bzw. Strukturbauteilabschnitt(en) für diesen Fertigungstakt ermittelt. Daraus wiederum werden die in dieser Bearbeitungsstation zu diesem Fertigungstakt zur Abarbeitung anstehenden Operationen ermittelt. Unter diesen individuell für den jeweiligen Fertigungstakt anstehenden Operationen lässt sich die Abarbeitungsreihenfolge dann leicht optimieren, um den Werkstückdurchsatz bei entsprechender Anpassung des Fertigungstaktes zu erhöhen.

Wesentlich bei der obigen Optimierung ist die Berücksichtigung aller zur Abarbeitung anstehenden Operationen, auch wenn der Arbeitsbereich der Bearbeitungsstation beispielsweise mit zwei unterschiedlichen Strukturbauteilen oder Strukturbauteilabschnitten belegt ist. Die Optimierung wird also an den fertigungstechnisch zu erwartenden oder tatsächlichen Gegebenheiten ausgerichtet.

Interessant ist die vorschlagsgemäße Lösung insbesondere, wenn die Programmierung der abzuarbeitenden Operationen zumindest teilweise offline, also unabhängig von dem Fertigungsbetrieb erfolgt. Dann liegt regelmäßig für jede abzuarbeitende Operation ein NC-Programmteil vor, wobei aus den NC-Programmteilen und der optimierten Abarbeitungsreihenfolge ein Gesamtprogrammablauf generiert werden kann (Anspruch 5).

Die Optimierung der Abarbeitungsreihenfolge kann nach verschiedenen Optimierungskriterien erfolgen. Dies ist Gegenstand der Ansprüche 6 bis 11.

Nach einer weiteren Lehre gemäß Anspruch 12, der eigenständige Bedeutung zukommt, wird eine Ablaufsteuerung für den Betrieb einer getakteten Fertigungsstraße für die Bearbeitung von Flugzeug-Strukturbauteilen beansprucht. Die Ablaufsteuerung ist mit den Maschinensteuerungen der Bearbeitungsmaschinen gekoppelt.

Wesentlich ist nach dieser weiteren Lehre, dass die Ablaufsteuerung in obiger Weise die Abarbeitungsreihenfolge in der Bearbeitungsstation für einen Fertigungstakt ermittelt und die optimierte Abarbeitungsreihenfolge für die maschinelle Abarbeitung abspeichert.

Für den bevorzugten Fall, dass den abzuarbeitenden Operationen jeweils ein insbesondere offline programmiertes NC-Programmteil zugeordnet ist, übernimmt die Ablaufsteuerung auch die Erzeugung eines Gesamtprogrammablaufs wie oben erläutert (Anspruch 13).

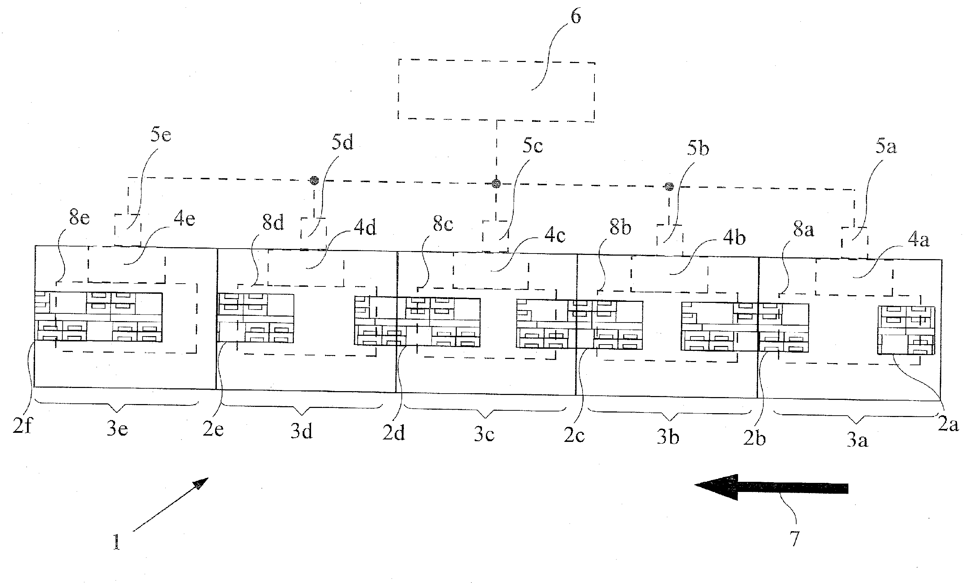

Im Folgenden wird die Erfindung anhand der Zeichnung näher erläutert. In der Zeichnung zeigt
- Fig. 1: eine getaktete Fertigungsstraße für die Bearbeitung von Flugzeug-Strukturbauteilen mit einer vorschlagsgemäßen Ablaufsteuerung,

Die in Fig. 1 dargestellte Fertigungsstraße 1 für die Bearbeitung von Flugzeug-Strukturbauteilen 2 dient der Durchführung des vorschlagsgemäßen Steuerungsverfahrens. Die Fertigungsstraße 1 ist hier mit insgesamt fünf Bearbeitungsstationen 3 ausgestattet, die jeweils genau eine Bearbeitungsmaschine 4 aufweisen. Grundsätzlich können natürlich auch Bearbeitungsstationen ohne Bearbeitungsmaschinen vorgesehen sein, beispielsweise wenn es sich um manuelle Bearbeitungsstationen handelt. Im Übrigen kann die Anzahl von Bearbeitungsstationen 3 und Bearbeitungsmaschinen 4 frei gewählt werden.

Jede Bearbeitungsmaschine 4 ist mit einer Maschinensteuerung 5 ausgestattet, die mit einer Ablaufsteuerung 6 steuerungstechnisch gekoppelt ist.

In Fig. 1 sind die Bezugsziffern einiger sich wiederholender Komponenten mit einem Buchstabenzusatz versehen worden. Im Sinne einer übersichtlichen Darstellung wird im Folgenden auf den Buchstabenzusatz verzichtet, sofern es auf eine Unterscheidung der sich wiederholenden Komponenten nicht ankommt.

An jedem Strukturbauteil 2 und damit an jedem Strukturbauteilabschnitt ist eine vorbestimmte Anzahl von maschinellen Operationen abzuarbeiten. Die diesbezüglichen Informationen sind in der Ablaufsteuerung 6 oder einer übergeordneten Steuerungsebene abgespeichert.

Die Strukturbauteile 2 werden nacheinander taktweise durch den Arbeitsbereich 8 der jeweiligen Bearbeitungsstation 3 hindurch gefördert. Die Förderrichtung ist in Fig. 1 mit dem Bezugszeichen "7" angedeutet.

Im Arbeitsbereich 8 einer Bearbeitungsstation 3 können die entsprechenden maschinellen Operationen an dem jeweiligen Strukturbauteilabschnitt abgearbeitet werden. Im Falle einer Bearbeitungsstation 3 mit einem Nietroboter handelt es sich bei dem Arbeitsbereich 8 um den von dem Roboter erreichbaren Arbeitsraum.

Es lässt sich nun der Darstellung in Fig. 1 entnehmen, dass der Arbeitsbereich 8 einer Bearbeitungsstation 3 je nach Fertigungstakt mit mindestens einem Strukturbauteilabschnitt belegt wird. Beispielsweise ist die Bearbeitungsstation 3a mit dem Strukturbauteil 2a und einem Strukturbauteilabschnitt des Strukturbauteils 2b belegt. Die Bearbeitungsstationen 3b, 3c und 3d sind jeweils mit Strukturbauteilabschnitten zweier Strukturbauteile (2b, 2c; 2c, 2d; 2d, 2e) belegt. Die Bearbeitungsstation 3e ist mit einem Strukturbauteilabschnitt des Strukturbauteils 2f belegt.

Die Aufteilung der Strukturbauteile 2 auf die Arbeitsbereiche 8 lässt sich unabhängig von der jeweiligen Fertigungssituation nicht vorhersagen, da die Reihenfolge der Strukturbauteile 2 in der Fertigungsstraße letztlich von der Auftragsplanung abhängt. Hinzu kommt, dass die Strukturbauteile 2 in Förderrichtung 7 ganz unterschiedliche Längserstreckungen aufweisen.

Von besonderer Bedeutung für den Werkstückdurchsatz ist die optimale Bestimmung der Abarbeitungsreihenfolge der in einer Bearbeitungsstation 3 und zu einem Fertigungstakt abzuarbeitenden Operationen. Die vorschlagsgemäße Ermittlung der Abarbeitungsreihenfolge in den Bearbeitungsstationen 3 wird im Folgenden anhand einer einzigen Bearbeitungsstation 3 erläutert:

Die Basis für die Ermittlung der Abarbeitungsreihenfolge in einer Bearbeitungsstation 3 für einen bestimmten Fertigungstakt basiert zunächst einmal auf der Ermittlung der voraussichtlichen oder tatsächlichen Belegung des Arbeitsbereichs 8 der Bearbeitungsstation 3 mit Strukturbauteil(en) bzw. Strukturbauteilabschnitt(en) für den jeweiligen Fertigungstakt. Die Daten hierfür können von einem Planungswerkzeug für den Materialfluss stammen.

Aus der Belegung der Bearbeitungsstation 3 werden anschließend die insgesamt in dieser Bearbeitungsstation 3 zu diesem Fertigungstakt zur Abarbeitung anstehenden Operationen ermittelt. In der Bearbeitungsstation 3c handelt es sich hier beispielsweise um die Operationen, die dem in die Bearbeitungsstation 3c hineinragenden Strukturbauteilabschnitt des Strukturbauteils 2c und dem in die Bearbeitungsstation 3c hineinragenden Strukturbauteilabschnitt des Strukturbauteils 2d zugeordnet sind. Schließlich wird die Abarbeitungsreihenfolge unter den so ermittelten Operationen insgesamt optimiert. Die diesbezüglichen Optimierungskriterien werden weiter unten diskutiert.

Die oben erläuterte, optimierte Abarbeitungsreihenfolge wird anschließend für die maschinelle Abarbeitung abgespeichert.

Selbstverständlich sind verschiedenste Varianten für die Realisierung der Bearbeitungsmaschinen 4 denkbar. Hier und vorzugsweise handelt es sich bei mindestens einer Bearbeitungsmaschine 4 zumindest einer Bearbeitungsstation 3 um eine Nietmaschine, insbesondere um einen Nietroboter. Entsprechend sind die dortigen abzuarbeitenden, maschinellen Operationen jedenfalls zum Teil Nietoperationen.

Bei den Strukturbauteilen 2 handelt es sich bei dem dargestellten und insoweit bevorzugten Ausführungsbeispiel um Flugzeug-Rumpfsektionen 2, die entlang ihrer Längsachse durch die Bearbeitungsstationen 3 gefördert werden. Die Längsachsen verlaufen dabei parallel zu der oben angesprochenen Förderrichtung 7.

Grundsätzlich kann es sich bei den Strukturbauteilen 2 aber auch um Flugzeug-Tragflächensektionen oder dergleichen handeln, die ebenfalls entlang ihrer Längsachse durch die Bearbeitungsstationen 3 geführt werden.

Die schematische Belegung des Arbeitsbereichs 8e der Bearbeitungsstation 3e der in Fig. 1 gezeigten Fertigungsstraße 1 umfasst einen Strukturbauteilabschnitt. Dieser Strukturbauteilabschnitt, bei dem es sich um einen Abschnitt der Rumpfsektion 2f handelt, ist mit einer Reihe von parallelen Spanten (nicht gezeigt) ausgestattet, die sich in Förderrichtung 7 fortsetzt.

An den Spanten des betreffenden Strukturbauteilabschnitts sind Nietoperationen durchzuführen. Wesentlich ist hier lediglich, dass unterschiedliche Operationstypen vorgesehen sind. Um welche Operationstypen es sich im Einzelnen handelt, ist für die vorschlagsgemäße Lösung ohne Belang.

Grundsätzlich kann die vorschlagsgemäße Optimierung der Abarbeitungsreihenfolge vorgenommen werden, bevor der betreffende Fertigungstakt erreicht wird. Dies hat den Vorteil der zeitlichen Entkopplung der Optimierung einerseits und des Fertigungsbetriebs andererseits. Beispielsweise kann dies vorteilhaft sein, wenn die Abarbeitungsreihenfolge in einer Simulation oder dergleichen überprüft werden soll.

Insbesondere im Fall der Verwendung von Nietrobotern handelt es sich bei der Bearbeitungsmaschine 4 um eine NC-gesteuerte Bearbeitungsmaschine 4, wobei jeder durch diese Bearbeitungsmaschine 4 abzuarbeitenden Operation ein NC-Programmteil zugeordnet ist. Dieses NC-Programmteil kann offline generiert werden und eine Bewegungsfolge und/oder Schaltbefehle für ein gegebenenfalls vorhandenes, aktives Werkzeug enthalten. Die NC-Programmteile können offline, beispielsweise mit Hilfe von CAD-Programmen oder dergleichen generiert werden.

Aus den NC-Programmteilen wird basierend auf der optimierten Abarbeitungsreihenfolge ein Gesamtprogrammablauf für die mindestens eine NC-Bearbeitungsmaschine 4 generiert. Der Gesamtprogrammablauf wird dann innerhalb des betreffenden Fertigungstaktes in der mindestens einen Bearbeitungsmaschine 4 abgearbeitet.

Vorzugsweise ist es nun so, dass die Bearbeitungsmaschinen 4 zumindest zum Teil auf die jeweilige Operation hin konfiguriert werden, wobei die Optimierung - jedenfalls auch - im Hinblick auf eine Reduzierung von Konfigurationswechseln vorgenommen wird. Der Operationstyp einer Operation hängt hier davon ab, welche Konfiguration die Bearbeitungsmaschine 4 zur Durchführung der jeweiligen Operation einnehmen muss. An jedem Spant des Strukturbauteilabschnitts sind eine Reihe von Operationen durchzuführen.
Die Optimierung im Hinblick auf eine Reduzierung von Konfigurationswechseln lässt sich auf besonders einfache Weise realisieren, indem nämlich zunächst die Operationen mit gleicher Maschinenkonfiguration gruppiert werden. Die Gruppierung kann beispielsweise durch eine Zwischenspeicherung in der Ablaufsteuerung 6 o. dgl. erfolgen.

Für die Abarbeitung aller Operationen können lediglich zwei Konfigurationswechsel erforderlich sein. Damit lässt sich regelmäßig Zeit sparen und der Werkstückdurchsatz erhöhen, sofern der Fertigungstakt entsprechend angepaßt wird.

Die obige Konfiguration kann je nach Bearbeitungsmaschine 4 unterschiedliche Aspekte umfassen. Beispielsweise kann es notwendig sein, dass für die Bearbeitungsmaschinen 4 je nach Operation ein Werkzeugwechsel durchgeführt wird, wobei die Optimierung - jedenfalls auch - im Hinblick auf eine Reduzierung von Werkzeugwechseln vorgenommen wird.

Denkbar ist aber auch, dass die Konfiguration die Bestückung der Bearbeitungsmaschinen 4 mit Verbrauchsmaterial o. dgl. betrifft. Dies ist insbesondere für Nietmaschinen, insbesondere Nietroboter, relevant, die ggf. je nach Operation mit unterschiedlichen Nieten bestückt werden, wobei die Optimierung dann - jedenfalls auch - im Hinblick auf eine Reduzierung der Änderung der jeweiligen Bestückung vorgenommen wird.

Ein wichtiges Optimierungskriterium ist ferner die Abarbeitungszeit, die benötigt wird, um die Operationen in einer Bearbeitungsstation 3 während eines Fertigungstaktes durchzuführen.

Für den Fall, dass mindestens eine der Bearbeitungsmaschinen 4 einen Manipulator, insbesondere einen Roboter, aufweist, ist es vorzugsweise vorgesehen, dass die Optimierung - jedenfalls auch - im Hinblick auf eine Reduzierung von Verfahrwegen durchgeführt wird. Durch die Reduzierung von Mehrfachwegen lässt sich natürlich auch die Abarbeitungszeit ganz erheblich reduzieren.

Die obigen Optimierungskriterien lassen sich je nach Randbedingung miteinander oder mit weiteren Optimierungskriterien kombinieren. Insoweit ist die Darstellung einzelner Optimierungskriterien hier nicht beschränkend zu verstehen.

Nach einer weiteren Lehre, der eigenständige Bedeutung zukommt, wird die oben angesprochene Ablaufsteuerung 6 als solche beansprucht. Die Ablaufsteuerung 6 ist mit den Maschinensteuerungen 5 der Bearbeitungsstationen 3 steuerungstechnisch gekoppelt. Die Ablaufsteuerung 6 übernimmt die Ermittlung der optimierten Abarbeitungsreihenfolge im Sinne des vorschlagsgemäßen Verfahrens. Auf alle obigen, diesbezüglichen Ausführungen darf verwiesen werden.

Von besonderer Bedeutung im Zusammenhang mit der Ablaufsteuerung 6 ist die Erzeugung des oben erläuterten Gesamtprogrammablaufs aus den einzelnen NC-Programmteilen und aus der optimierten Abarbeitungsreihenfolge. Die Ablaufsteuerung 6 generiert den obigen Gesamtprogrammablauf und löst dessen Abarbeitung innerhalb des betreffenden Fertigungstaktes in der mindestens einen Bearbeitungsmaschine 4 aus.

## Patentansprüche

1. Verfahren zur Steuerung einer getakteten Fertigungsstraße (1) zur Bearbeitung von Flugzeug-Strukturbauteilen (2), wobei die Fertigungsstraße (1) mindestens eine Bearbeitungsstation (3) mit mindestens einer Bearbeitungsmaschine (4) aufweist,
wobei es sich bei den Strukturbauteilen (2) um Flugzeug-Rumpfsektionen oder um Flugzeug-Tragflächensektionen handelt, die entlang ihrer Längsachse durch die Bearbeitungsstationen (3) gefördert werden,
wobei an jedem Strukturbauteilabschnitt eine vorbestimmte Anzahl von maschinellen Operationen abzuarbeiten sind und wobei hierfür die Strukturbauteile (2) nacheinander taktweise durch den Arbeitsbereich der Bearbeitungsstation (3) hindurch gefördert werden,
wobei der Arbeitsbereich (8) der Bearbeitungsstation (3) je nach Fertigungstakt mit mindestens einem Strukturbauteil (2) und/oder mit mindestens einem Strukturbauteilabschnitt belegt wird,
wobei die Abarbeitungsreihenfolge in der Bearbeitungsstation (3) für einen Fertigungstakt ermittelt wird, indem die voraussichtliche oder tatsächliche Belegung des Arbeitsbereichs (8) mit Strukturbauteil(en) (2) bzw. Strukturbauteilabschnitt(en) für den Fertigungstakt ermittelt wird, aus der Belegung die insgesamt in dieser Bearbeitungsstation (3) zu diesem Fertigungstakt zur Abarbeitung anstehenden Operationen ermittelt werden und die Abarbeitungsreihenfolge unter diesen Operationen optimiert wird, wobei bei der Optimierung alle zur Abarbeitung anstehenden Operationen berücksichtigt werden, wenn der Arbeitsbereich (8) der Bearbeitungsstation (3) mit zwei unterschiedlichen Strukturbauteilen (2) oder Strukturbauteilabschnitten belegt ist
und wobei die optimierte Abarbeitungsreihenfolge für die maschinelle Abarbeitung abgespeichert wird.

2. Verfahren nach Anspruch 1, **dadurch gekennzeichnet, dass** die mindestens eine Bearbeitungsmaschine (4) zumindest einer Bearbeitungsstation (3) als Nietmaschine, insbesondere als Nietroboter, ausgestaltet ist und dass die abzuarbeitenden, maschinellen Operationen jedenfalls zum Teil Nietoperationen sind.

3. Verfahren nach einem der vorhergehenden Ansprüche, **dadurch gekennzeichnet, dass** die Optimierung der Abarbeitungsreihenfolge vorgenommen wird, bevor der betreffende Fertigungstakt erreicht wird.

4. Verfahren nach einem der vorhergehenden Ansprüche, **dadurch gekennzeichnet, dass** mindestens eine Bearbeitungsmaschine (4) als NC-gesteuerte Bearbeitungsmaschine (4) ausgestaltet ist, dass jeder durch diese Bearbeitungsmaschine (4) abzuarbeitenden Operation ein NC-Programmteil zugeordnet ist und dass aus den NC-Programmteilen basierend auf der optimierten Abarbeitungsreihenfolge ein Gesamtprogrammablauf für die mindestens eine Bearbeitungsmaschine (4) generiert und innerhalb des betreffenden Fertigungstaktes in der mindestens einen Bearbeitungsmaschine (4) abgearbeitet wird.

5. Verfahren nach einem der vorhergehenden Ansprüche, **dadurch gekennzeichnet, dass** die Bearbeitungsmaschinen (4) zumindest zum Teil auf die jeweilige Operation hin konfiguriert werden und dass die Optimierung im Hinblick auf eine Reduzierung von Konfigurationswechseln vorgenommen wird.

6. Verfahren nach einem der vorhergehenden Ansprüche, **dadurch gekennzeichnet, dass** im Rahmen der Optimierung alle Operationen mit gleicher Maschinenkonfiguration gruppiert und für die gruppenweise Abarbeitung vorgesehen werden.

7. Verfahren nach einem der vorhergehenden Ansprüche, **dadurch gekennzeichnet, dass** für die Bearbeitungsmaschinen (4) je nach Operation ein Werkzeugwechsel durchgeführt wird und dass die Optimierung im Hinblick auf eine Reduzierung von Werkzeugwechseln vorgenommen wird.

8. Verfahren nach Anspruch 2 und ggf. nach einem der Ansprüche 3 bis 8, **dadurch gekennzeichnet, dass** die Nietmaschinen (4), insbesondere die Nietroboter, je nach Operation mit unterschiedlichen Nieten bestückt werden und dass die Optimierung im Hinblick auf eine Reduzierung der Änderung der jeweiligen Bestückung vorgenommen wird.

9. Verfahren nach einem der vorhergehenden Ansprüche, **dadurch gekennzeichnet, dass** die Optimierung im Hinblick auf eine Reduzierung der Abarbeitungszeit vorgenommen wird.

10. Verfahren nach einem der vorhergehenden Ansprüche, **dadurch gekennzeichnet, dass** mindestens eine Bearbeitungsmaschine (4) einen Manipulator, insbesondere einen Roboter o. dgl. aufweist und dass die Optimierung im Hinblick auf eine Reduzierung von Verfahrwegen durchgeführt wird.

11. Ablaufsteuerung für eine getaktete Fertigungsstraße (1) zur Bearbeitung von Flugzeug-Strukturbauteilen (2), insbesondere zur Durchführung des Verfahrens nach einem der vorhergehenden Ansprüche, wobei die Fertigungsstraße (1) mindestens eine Bearbeitungsstation (3) mit mindestens einer Bearbeitungsmaschine (4) aufweist, wobei die Bearbeitungsmaschine (4) eine Maschinensteuerung (5) aufweist, die steuerungstechnisch mit der Ablaufsteuerung (6) gekoppelt ist,
wobei es sich bei den Strukturbauteilen (2) um Flugzeug-Rumpfsektionen oder um Flugzeug-Tragflächensektionen handelt, die entlang ihrer Längsachse durch die Bearbeitungsstationen (3) gefördert werden,
wobei an jedem Strukturbauteilabschnitt eine vorbestimmte Anzahl von maschinellen Operationen abzuarbeiten ist und wobei hierfür die Strukturbauteile (2) nacheinander taktweise durch den Arbeitsbereich der Bearbeitungsstation (3) hindurch gefördert werden,
wobei der Arbeitsbereich (8) der Bearbeitungsstation (3) je nach Fertigungstakt mit mindestens einem Strukturbauteilabschnitt belegt wird,
wobei die Ablaufsteuerung (6) die Abarbeitungsreihenfolge in der Bearbeitungsstation (3) für einen Fertigungstakt ermittelt, indem sie die voraussichtliche oder tatsächliche Belegung des Arbeitsbereichs (8) mit Strukturbauteil(en) (2) bzw. Strukturbauteilabschnitt(en) für den Fertigungstakt ermittelt, aus der Belegung die insgesamt in dieser Bearbeitungsstation (3) zu diesem Fertigungstakt zur Abarbeitung anstehenden Operationen ermittelt und die Abarbeitungsreihenfolge unter diesen Operationen optimiert, wobei bei der Optimierung alle zur Abarbeitung anstehenden Operationen berücksichtigt werden, wenn der Arbeitsbereich (8) der Bearbeitungsstation (3) mit zwei unterschiedlichen Strukturbauteilen (2) oder Strukturbauteilabschnitten belegt ist
und wobei die Ablaufsteuerung (6) die optimierte Abarbeitungsreihenfolge für die maschinelle Abarbeitung abspeichert.

12. Ablaufsteuerung nach Anspruch 12, **dadurch gekennzeichnet, dass** mindestens eine Bearbeitungsmaschine (4) als NC-gesteuerte Bearbeitungsmaschine (4) ausgestaltet ist, dass jeder durch diese Bearbeitungsmaschine (4) abzuarbeitenden Operation ein NC-Programmteil zugeordnet ist und dass die Ablaufsteuerung (6) aus den NC-Programmteilen basierend auf der optimierten Abarbeitungsreihenfolge ein Gesamtprogrammablauf für die mindestens eine NC-Bearbeitungsmaschine (4) generiert und die Abarbeitung innerhalb des betreffenden Fertigungstaktes in der mindestens einen Bearbeitungsmaschine (4) auslöst.

## Claims

1. Method for controlling a synchronized production line (1) for processing structural aircraft components (2), the production line (1) having at least one processing station (3) with at least one processing machine (4),
wherein the structural components (2) are aircraft fuselage sections or aircraft wing sections, which are transported through the processing stations (3) along their longitudinal axis,
wherein a predetermined number of mechanical operations are to be performed on each structural component portion and wherein, for this, the structural components (2) are transported one after the other in a synchronized manner through the working area of the processing station (3),
wherein, depending on the production cycle, the working area (8) of the processing station (3) is occupied by at least one structural component (2) and/or by at least one structural component portion,
wherein the sequence of the operations to be performed in the processing station (3) for a production cycle is determined, in that the probable or actual occupancy of the working area (8) with structural component(s) (2) or structural component portion(s) for the production sequence is determined, the operations due to be performed overall in this processing station (3) for this production cycle are determined from the occupancy and the sequence in which these operations are to be performed is optimized, wherein all of the operations due to be performed are taken into account in the optimization if the working area (8) of the processing station (3) is occupied by two different structural components (2) or structural component portions,
and wherein the optimized sequence for the operations to be performed by machine is stored.

2. Method according to Claim 1, **characterized in that** the at least one processing machine (4) of at least one processing station (3) is designed as a riveting machine, in particular as a riveting robot, and **in that** at least some of the machine operations to be performed are riveting operations.

3. Method according to one of the preceding claims, **characterized in that** the optimization of the sequence of operations to be performed is undertaken before the production cycle concerned is reached.

4. Method according to one of the preceding claims, **characterized in that** at least one processing machine (4) is designed as a numerically controlled processing machine (4), **in that** each operation to be performed by this processing machine (4) is assigned an NC program part and **in that** an overall program sequence for the at least one processing machine (4) is generated from the NC program parts on the basis of the optimized sequence of operations to be performed and is performed in the at least one processing machine (4) within the production cycle concerned.

5. Method according to one of the preceding claims, **characterized in that** the processing machines (4) are at least partly configured for the respective operation and **in that** the optimization is performed with a view to reducing changes of configuration.

6. Method according to one of the preceding claims, **characterized in that**, in the course of the optimization, all of the operations with the same machine configuration are grouped and are intended for being performed as a group.

7. Method according to one of the preceding claims, **characterized in that**, depending on the operation, a tool change is carried out for the processing machines (4) and **in that** the optimization is performed with a view to reducing tool changes.

8. Method according to Claim 2 and possibly according to one of Claims 3 to 8, **characterized in that**, depending on the operation, the riveting machines (4), in particular the riveting robots, are loaded with different rivets and **in that** the optimization is performed with a view to reducing the changing of the respective loading.

9. Method according to one of the preceding claims, **characterized in that** the optimization is performed with a view to reducing the time for performing operations.

10. Method according to one of the preceding claims, **characterized in that** at least one processing machine (4) has a manipulator, in particular a robot or the like, and **in that** the optimization is carried out with a view to reducing travelling distances.

11. Sequence control for a synchronized production line (1) for processing structural aircraft components (2), in particular for carrying out the method according to one of the preceding claims, the production line (1) having at least one processing station (3) with at least one processing machine (4), the processing machine (4) having a machine control (5), which in controlling terms is coupled to the sequence control (6),
wherein the structural components (2) are aircraft fuselage sections or aircraft wing sections, which are transported through the processing stations (3) along their longitudinal axis,
wherein a predetermined number of mechanical operations are to be performed on each structural component portion and wherein, for this, the structural components (2) are transported one after the other in a synchronized manner through the working area of the processing station (3),
wherein, depending on the production cycle, the working area (8) of the processing station (3) is occupied by at least one structural component portion,
wherein the sequence control (6) determines the sequence of the operations to be performed in the processing station (3) for a production cycle, in that it determines the probable or actual occupancy of the working area (8) with structural component(s) (2) or structural component portion(s) for the production sequence, determines the operations due to be performed overall in this processing station (3) for this production cycle from the occupancy and optimizes the sequence in which these operations are to be performed, wherein all of the operations due to be performed are taken into account in the optimization if the working area (8) of the processing station (3) is occupied by two different structural components (2) or structural component portions,
and wherein the sequence control (6) stores the optimized sequence for the operations to be performed by machine.

12. Sequence control according to Claim 12, **characterized in that** at least one processing machine (4) is designed as a numerically controlled processing machine (4), **in that** each operation to be performed by this processing machine (4) is assigned an NC program part and **in that** the sequence control (6) generates an overall program sequence for the at least one numerically controlled processing machine (4) from the NC program parts on the basis of the optimized sequence of operations to be performed and initiates the performance of the operations in the at least one processing machine (4) within the production cycle concerned.

## Revendications

1. Procédé de commande d'une voie de fabrication cadencée (1) pour l'usinage de composants structurels d'avion (2) la voie de fabrication (1) présentant au moins un poste d'usinage (3) avec au moins une machine d'usinage (4),
les composants structurels (2) étant des sections de fuselage d'avion ou des sections de surface portante d'avion qui sont transportées le long de leur axe longitudinal à travers les postes d'usinage (3),
un nombre prédéterminé d'opérations de machine devant être exécuté sur chaque portion de composant structurel et pour cela les composants structurels (2) étant transportés les uns derrière les autres de manière cadencée à travers la zone de travail du poste d'usinage (3),
la zone de travail (8) du poste d'usinage (3), en fonction de la cadence de fabrication, étant chargée avec au moins un composant structurel (2) et/ou avec au moins une portion de composant structurel,
la séquence d'exécution dans le poste d'usinage (3) étant déterminée pour une cadence de fabrication en déterminant le chargement probable ou effectif de la zone de travail (8) avec un ou plusieurs composants structurels (2) ou avec une ou plusieurs portions de composant structurel pour la cadence de fabrication, à partir du chargement, les opérations devant être exécutées au total dans ce poste d'usinage (3) à cette cadence de fabrication étant déterminées et la séquence d'exécution étant optimisée pour ces opérations, lors de l'optimisation, toutes les opérations à exécuter étant prises en compte lorsque la zone de travail (8) du poste d'usinage (3) est chargée avec deux composants structurels différents (2) ou deux portions de composant structurel différentes et la séquence d'exécution optimisée pour l'exécution par machine étant mémorisée.

2. Procédé selon la revendication 1, **caractérisé en ce que** l'au moins une machine d'usinage (4) d'au moins un poste d'usinage (3) est configurée sous forme de riveteuse, en particulier sous forme de robot riveteur, et **en ce que** les opérations par machine à exécuter sont dans chaque cas en partie des opérations de rivetage.

3. Procédé selon l'une quelconque des revendications précédentes, **caractérisé en ce que** l'optimisation de la séquence d'exécution est effectuée avant d'atteindre la cadence de fabrication concernée.

4. Procédé selon l'une quelconque des revendications précédentes, **caractérisé en ce qu'**au moins une machine d'usinage (4) est réalisée sous forme de machine d'usinage (4) à commande numérique, **en ce qu'**à chaque opération à exécuter par cette machine d'usinage (4) est associée une partie de programme numérique et **en ce qu'**à partir des parties de programmes numériques, en se basant sur la séquence d'exécution optimisée, un déroulement de programme total pour l'au moins une machine d'usinage (4) est généré et est exécuté à l'intérieur de la cadence de fabrication concernée dans l'au moins une machine d'usinage (4).

5. Procédé selon l'une quelconque des revendications précédentes, **caractérisé en ce que** les machines d'usinage (4) sont configurées au moins en partie en vue de l'opération respective et **en ce que** l'optimisation est effectuée en vue d'une réduction de changements de configuration.

6. Procédé selon l'une quelconque des revendications précédentes, **caractérisé en ce que** dans le cadre de l'optimisation, toutes les opérations avec la même configuration de machine sont regroupées et sont prévues pour une exécution en groupe.

7. Procédé selon l'une quelconque des revendications précédentes, **caractérisé en ce que** pour les machines d'usinage (4), un changement d'outil est effectué en fonction de l'opération et **en ce que** l'optimisation est effectuée en vue d'une réduction des changements d'outils.

8. Procédé selon la revendication 2 et éventuellement selon l'une quelconque des revendications 3 à 8, **caractérisé en ce que** les riveteuses (4), en particulier les robots riveteurs, en fonction de l'opération sont alimentés avec des rivets différents et **en ce que** l'optimisation est effectuée en vue d'une réduction de la variation de l'alimentation respective.

9. Procédé selon l'une quelconque des revendications précédentes, **caractérisé en ce que** l'optimisation est effectuée en vue d'une réduction du temps d'exécution.

10. Procédé selon l'une quelconque des revendications précédentes, **caractérisé en ce qu'**au moins une machine d'usinage (4) présente un manipulateur, en particulier un robot ou similaire et **en ce que** l'optimisation est effectuée en vue d'une réduction des trajets de déplacement.

11. Commande de déroulement pour une voie de fabrication cadencée (1) pour l'usinage de composants structurels d'avion (2), en particulier pour mettre en oeuvre le procédé selon l'une quelconque des revendications précédentes, la voie de fabrication (1) présentant au moins un poste d'usinage (3) avec au moins une machine d'usinage (4), la machine d'usinage (4) présentant une commande de machine (5) qui est accouplée par une technique de commande à la commande de déroulement (6),
les composants structurels (2) étant des sections de fuselage d'avion ou des sections de surface portante d'avion qui sont transportées le long de leur axe longitudinal à travers les postes d'usinage (3),
un nombre prédéterminé d'opérations de machine devant être exécuté sur chaque portion de composant structurel et pour cela les composants structurels (2) étant transportés les uns derrière les autres de manière cadencée à travers la zone de travail du poste d'usinage (3),
la zone de travail (8) du poste d'usinage (3), en fonction de la cadence de fabrication, étant chargée avec au moins une portion de composant structurel,
la commande de déroulement (6) déterminant la séquence d'exécution dans le poste d'usinage (3) pour une cadence de fabrication en déterminant le chargement probable ou effectif de la zone de travail (8) avec un ou plusieurs composants structurels (2) ou avec une ou plusieurs portions de composant structurel pour la cadence de fabrication, en déterminant, à partir du chargement, les opérations devant être exécutées au total dans ce poste d'usinage (3) à cette cadence de fabrication et en optimisant la séquence d'exécution lors de ces opérations, lors de l'optimisation, toutes les opérations à exécuter étant prises en compte lorsque la zone de travail (8) du poste d'usinage (3) est chargée avec deux composants structurels différents (2) ou deux portions de composant structurel différentes et la commande de déroulement (6) mémorisant la séquence d'exécution optimisée pour l'exécution par machine.

12. Commande de déroulement selon la revendication 12, **caractérisée en ce qu'**au moins une machine d'usinage (4) est configurée sous forme de machine d'usinage à commande numérique (4), **en ce qu'**à chaque opération à exécuter par cette machine d'usinage (4) est associée une partie de programme numérique et **en ce que** la commande de déroulement (6), à partir des parties de programmes numériques, en se basant sur la séquence d'exécution optimisée, génère un déroulement de programme total pour l'au moins une machine d'usinage à commande numérique (4) et déclenche l'exécution à l'intérieur de la cadence de fabrication concernée dans l'au moins une machine d'usinage (4).
